# EUROPÄISCHE PATENTSCHRIFT

(11) **EP 0 425 795 B1**
(45) Veröffentlichungstag und Bekanntmachung des Hinweises auf die Patenterteilung: **05.01.1994**
(21) Anmeldenummer: 90117338.5
(22) Anmeldetag: 08.09.1990
(51) Int. Cl.: B65B 3/02

(54) **Packungsherstellungsmaschine mit geführten Transportbehältern**
Package making machine with guided conveying containers
Machine de fabrication d'emballages avec des récipients de transport guidés

(30) Priorität: 28.10.1989 DE 3935975
(43) Veröffentlichungstag der Anmeldung: 08.05.1991
(73) Patentinhaber: Tetra Laval Holdings & Finance SA, 1009 Pully (CH)
(72) Erfinder: Reil, Wilhelm, W-6140 Bensheim (DE); Deutschbein, Ulrich, W-6109 Mühltal (DE)
(74) Vertreter: Weber, Dieter, Dr.

(56) Entgegenhaltungen:
- DE-A- 3 531 728
- GB-A- 1 157 594
- GB-A- 1 292 823
- US-A- 3 027 989

## Beschreibung

Die Erfindung betrifft eine Maschine zur Herstellung von quaderförmigen Packungen, insbesondere für Milch, Saft oder dergleichen, die jeweils einen Tubus aus mit Kunststoff beschichtetem Trägermaterial, wie z.B. Papier oder Pappe aufweisen, mit Einrichtungen zur Bildung des Tubus und Einrichtungen mit Außenformbacken zum Anspritzen von Kunststoff an den Tubus, mit einem längs des Bearbeitungsweges verlaufenden Förderband, welches eine Reihe von im Querschnitt viereckigen Transportbehältern haltert, mit Einrichtungen zum Einführen des Tubus in den jeweiligen Transportbehälter und mit Einrichtungen zum herausnehmen und Abfördern des bearbeiteten Tubus, wobei eine Seitenwand eines Transportbehälters parallel zur Ebene des flachen Förderbandes angeordnet ist.

Bei den Herstellern von Fließmittelpackungen sind derartige Maschinen bekannt. Hergestellt werden beispielsweise quaderförmige Milchpackungen, deren Tubus aus beschichtetem Papier besteht und durch Verschließen über eine Längssiegelnaht gebildet ist, wobei der Boden durch Umfalten eines Teils des Tubusmaterials gebildet wird, welches danach abdichtend versiegelt wird. Der Deckel bekannter Milchpackungen besteht entweder vollständig aus Kunststoff oder weist zwischen Papierlaschen eingespritzte Kunststoffbrücken auf, die auch mit Öffnungsvorrichtungen verbunden sind, so daß mit dem Anspritzen des Kunststoffes an das deckelseitige Ende des Tubus gleichzeitig die Öffnungsvorrichtung angespritzt werden kann.

Für die Herstellung derartige Fließmittelpackungen wünscht man leistungsstarke Maschinen, d.h. es soll bei zuverlässiger Versiegelung und einwandfrei ausgestalteten Öffnungsvorrichtungen eine Packung in großer Stückzahl pro Zeiteinheit hergestellt, gefüllt und abgefördert werden.

Es versteht sich, daß der Anspritzvorgang, auch wenn der gesamte Deckel mit Öffnungsvorrichtung an den Tubus angespritzt wird, Mindestzeiten erfordert, denn der Packungstubus muß auf einen Dorn aufgezogen werden, welcher als Innenform dient, und es müssen auseinander- und zusammenbewegbare Außenformteile um ein Ende dieses Dornes herumgelegt, verschlossen und verspannt werden, wonach die Kunststoffmasse mit hoher Temperatur fließfähig eingespritzt wird, die Formteile müssen dann möglichst gekühlt und danach wieder geöffnet werden. Die Bewegungen der Formteile erfolgen taktweise, wobei durch Verkürzung des Taktes die Leistung der Maschine gesteigert werden könnte. Die Verringerung der Taktzeit hängt aber von zahlreichen Faktoren ab, unter anderem den Bewegungswegen der Spritzformteile.

Es ist Aufgabe der vorliegenden Erfindung, die Leistung einer Packungsherstellungsmaschine der eingangs genannten Art zu vergrößern, vorzugsweise derart, daß die Spritzwerkzeuge schneller geöffnet und geschlossen werden können.

Diese Aufgabe gelingt erfindungsgemäß dadurch, daß wenigstens ein erster Teil mindestens eines Trums des endlos umlaufenden Förderbandes unter einem festen Winkel von etwa 45° gegenüber dem zweiten Teil dieses Trums geneigt angeordnet verläuft, daß die Anspritzeinrichtung im ersten geneigten Teil des Förderbandes angeordnet ist, daß die Bewegungsrichtung der Tuben um etwa 45° zur Bewegungsrichtung der Außenformbacken geneigt ist und daß Schienen zur Führung des Förderbandes längs dessen Förderweges befestigt sind. Durch die vorstehenden Maßnahmen kann die Förderleistung einer Packungsherstellungsmaschine unerwartet dadurch gesteigert werden, daß die Bewegungswege der Spritzformteile verkürzt werden.

Dieser Erkenntnis liegen folgende Überlegungen zugrunde. Beim Herstellen von Flüssigkeitspackungen hat es sich als günstig erwiesen, Förderbänder zu verwenden, um einen Papiertubus in einem Transportbehälter von einer Bearbeitungsstation zur nächsten zu führen, d.h. im Verlaufe der Herstellung den Tubus mit angespritzten Deckelteilen zu versehen, die Packung auf den Kopf zu stellen, zu füllen, bodenseitig zu falten und durch Siegeln zu verschließen. Hierbei ist es unerläßlich, daß speziell bei im Querschnitt viereckigen tubusförmigen Packungen die Reihe der Tuben und damit der Transportbehälter am Förderband so angeordnet wird, daß die Ebene des Förderbandes parallel zu wenigstens einer Seitenwand des Tubus liegt. Von dieser Anordnung des jeweiligen Tubus ging man auch in der Spritzeinrichtung aus, weshalb Außenformhälften wenigstens über die Hälfte der Tubusbreite aus der Spritzposition jeweils herausbewegt wurden, um den Weg für die mit dem angespritzten Deckel versehene Packung zur nächsten Station hin freizugeben. Mit anderen Worten konnte man verständlicherweise den Tubus mit angespritztem Deckel aus der Spritzform erst dann herausbewegen, wenn die Wege freigegeben waren bzw. die Werkzeuge aus diesen Wegen vollständig herausbewegt waren. Betrachtet man eine im Querschnitt quadratische Packung von oben in deren Längsrichtung, dann versteht man, daß jede Außenformhälfte der Spritzeinrichtung um wenigstens eine halbe Kantenbreite des Tubus herausbewegt werden mußte, bevor der Tubus aus den geöffneten Spritzformen heraus weiterbewegt werden konnte.

Die Erfindung setzt nun hier an und schlägt eine Position des Tubus in der Spritzeinrichtung vor, bei welcher der Weg der Außenformbacken der Spritzeinrichtung kürzer wird. Dies ist z.B. dann der Fall, wenn in Draufsicht auf die im Querschnitt quadratische Packung bzw. den Tubus die Bewegung der Formbacken nicht parallel zu zwei bzw. senkrecht zu den beiden anderen jeweils gegenüberliegenden Seitenwänden erfolgt; sondern wenn der Tubus um 45° derart gedreht wird, daß die Bewegung der Formbacken parallel zu einer Diagonalen erfolgt (und folglich senkrecht zu der anderen Diagonalen). Es hat sich gezeigt, daß tatsächlich schon nach geringem Öffnen der Auußenformbacken die Bewegung zum Herausfördern des Tubus mit angespritztem Deckel beginnen kann, wodurch die Taktzeit verkürzt und damit die Maschinenleistung vergrößert werden kann.

Dieser Erkenntnis und erfinderischen Idee stand aber die Bedingung entgegen, daß für die vorstehend beschriebene Bearbeitung der jeweilige Transportbehälter mit Tubus parallel zum Förderband liegen mußte. Vereint man beide Bedingungen, dann versteht man die erfindungsgemäße Lehre, nämlich einen Teil eines Trums des Förderbandes unter einem bestimmten Winkel zum anderen Teil anzuordnen, weil hierdurch einerseits die Packung in der richtigen Position durch die einzelnen Bearbeitungsstationen geführt werden kann und andererseits "über Eck" durch die Kunststoffanspritzeinrichtung geführt werden kann.

Zweckmäßig ist es dabei, wenn die Einrichtung zum Anspritzen von Kunststoff an den Tubus ein um eine Achse intermittierend drehbar angetriebenes Dornrad mit vier radial abstehenden, quaderförmigen Dornen als Innenform sowie zwei in Richtung der Dornradachse bewegbare Außenformhälften aufweist, daß der abgewinkelt angeordnete erste Teil des Trums des mit Umlenkrädern geführten Förderbandes im Bereich des Dornrades geradlinig ist, die Achsen der Umlenkrollen neben dem Dornrad etwa senkrecht zur Dornradachse stehen und daß die Laufrichtung dieses geradlinigen Trums unter etwa 45° zur Dornradachse steht. Der jeweilige Innendorn wird also durch die Drehbewegung des Dornrades aus den Außenformteilen herausbewegt, und diese Drehbewegung kann beginnen, nachdem die Außenformteile, bei denen es sich vorzugsweise um zwei Außenformhälften handelt, erst ein Stück weit voneinander entfernt worden sind. Während das Dornrad den Tubus mit angespritztem Deckel herauszubewegen beginnt, bewegen sich gleichzeitig die Außenformhälften weiter bis in ihre Endposition, bis die gesamte Breite des Weges des Tubus frei ist. Umgekehrt kann bei eingeführtem neuen Tubus ohne Deckel die Einführbewegung noch stattfinden, während die Außenformhälften bereits ihren Schließvorgang begonnen haben. Diese Gleichzeitigkeit der Bewegung erlaubt ein erhebliches Verkürzen der Taktzeiten und damit die Vergrößerung der Maschinenleistung.

Blickt man auf das vorzugsweise endlos umlaufende Förderband von oben in Richtung der Umlenkräder für das Förderband, dann ist die Dornradachse senkrecht dazu zu denken. Wenn die Bewegungsbahn des Förderbandes in der Horizontalen liegt, d.h. die Achsen der Umlenkräder für das Förderband vertikal liegen, dann befindet sich die Dornradachse in der horizontalen Ebene. Unter Voraussetzung dieser Anordnung der Teile wird vorzugsweise die geradlinige Teilbahn des Förderbandes, welche in der beschriebenen Weise abgewinkelt ist, so in den Bereich des Dornrades geführt, daß dessen Achse einen Winkel von 45° mit der Laufrichtung des genannten geradlinigen Trums des Förderbandes einschließt. Auf diese Weise erreicht man im Bereich der Anspritzeinrichtung eine Drehung des Tubus um 90° in der vorstehend beschriebenen Weise, so daß der Tubus tatsächlich "über Eck" in den Spritzformteilen stehen kann, während gleichwohl eine ebene Seitenwand (der vier ebenen Seitenwände) des Tubus und damit des Transportbehälters parallel zur Hauptebene des flachen Förderbandes verbleibt.

Hinsichtlich der Befestigung des Transportbehälters am Förderband hat die Erfindung vorgesehen, daß das Förderband ein Zahnriemen ist, an welchem die Transportbehälter tragende Haltestücke angebracht sind, deren Höhe etwa gleich der Breite des Förderbandes ist, und daß die Haltestücke mit Laufbolzen in den Führungsschienen längs des Förderweges geführt sind. Es ist nämlich zum Unlenken eines herkömmlich U-förmig verlaufenden Förderbandes nicht einfach, einen ersten Teil des Trums gegenüber dem übrigen Förderband umzulenken. Von oben in vertikaler Richtung gesehen, wenn sich die Bewegungsbahn des Förderbandes im wesentlichen in der Horizontalen befindet, entstehen dadurch nämlich konvexe und konkave Teile der Förderbahn. Konvex sollen hier die nach außen gewölbten und konkav hier die nach innen gewölbten Teile der Förderbahn genannt werden. Bei einer konvex gebogenen Förderbahn ist es einfach, wenn man diese dadurch umlenkt, daß auf der Innenseite ein Umlenkrad angeordnet ist, denn dieses stört die Bewegung nicht, zumal die Transportbehälter auf der Außenseite des Förderbandes angeordnet sind. Anders liegen die Verhältnisse aber im konkaven Teil der Bewegungsbahn, weil für eine derartige Umlenkung ein Umlenkrad auf der Außenseite angeordnet werden müßte, was aber ausgeschlossen ist, weil das Förderband hier die Transportbehälter trägt. Deshalb hat die Erfindung hier Führungsschienen vorgesehen, mit deren Hilfe Laufbolzen an den Haltestücken und damit die Haltestücke geführt werden, so daß über die Haltestücke das Förderband in jeder beliebigen Bahn umgelenkt werden kann. Die Notwendigkeit, Umlenkräder im konkaven Bewegungsteil außen anzubringen, ist hierdurch mit Vorteil eliminiert.

Zweckmäßig ist es gemäß der Erfindung ferner, wenn die Anbringung des plattenförmigen Haltestückes am Förderband mittels wenigstens eines Klemmblockes erfolgt, der am Haltestück so befestigt ist, daß das Förderband U-förmig umgriffen wird, und daß auf der dem Haltestück bezüglich Förderband gegenüberliegenden Seite ein Zwischenzahn aus dem Klemmblock in eine Zahnlücke des Förderbandes eingreifend vorsteht. Die Zähne des Förderbandes dienen einerseits für dessen Antrieb und andererseits für die Befestigung der Haltestücke am Förderband. Die plattenförmige Ausgestaltung des Haltestückes hat den Vorteil, daß die Befestigung der ebenen Seitenwand des Transportbehälters einfacher gelingt, und außerdem erfährt das Haltestück durch die Plattenform auch eine gewisse Länge in Förderrichtung, wodurch sich Führungsvorteile ergeben. Es ist nämlich zweckmäßig, wenn man wenigstens an einem Ende der Platte bzw. des Haltestückes im Abstand zwei Laufbolzen anordnet, weil hierdurch die Position der Ebene des Haltestückes und damit die Position des Transportbehälters durch die Schiene exakt festgelegt wird.

Dabei ist es besonders vorteilhaft, wenn erfindungsgemäß sowohl längs der oberen als auch der unteren Längskante des Förderbandes jeweils eine Führungsschiene ortsfest über Ständer angebracht ist zur führenden Aufnahme von an den Haltestücken angeordneten Rollen und/oder Gleitschuhen. Es hat sich nämlich als günstig erwiesen, auf die Laufbolzen entweder Rollen zu stecken oder Gleitschuhe anzubringen, die jeweils in den ortsfesten Führungsschienen laufen, so daß eine Führungseinrichtung mit langer Lebensdauer bei nur geringem Verschleiß geschaffen wird.

Bei vorteilhafter weiterer Ausgestaltung der Erfindung liegt die Hauptebene des plattenförmigen Haltestückes parallel zur Hauptebene des Förderbandes, das Haltestück hat die Form einer im wesentlichen trapezförmigen Platte, und ein Laufbolzen ist sowohl am oberen schmaleren und zwei hintereinanderlaufende Laufbolzen sind am unteren breiten Ende des trapezförmigen Haltestückes angeordnet, wobei vorzugsweise an diesen beiden Enden des Haltestückes jeweils ein Klemmblock angeordnet ist. Durch die hintereinanderlaufenden Laufbolzen bestimmt der Verlauf der Führungsschiene genau die Lage des Haltestückes und damit des Transportbehälters, damit der darin befindliche Tubus richtig in die einzelnen Behandlungsstationen der Maschine geführt wird.

Wenn man bei weiterer Ausgestaltung der Erfindung zwei Trums des Förderbandes parallel zueinander und durch den Bereich zweier Dornräder verlaufend abgewinkelt anordnet und wenn beide Dornräder eine gemeinsame Drehachse haben, dann läßt sich die Leistung der Maschine um das Doppelte steigern. Diese Verwendung von zwei Dornrädern mit gemeinsamer Drehachse ist bei herkömmlichen Förderwegen zwar schon in Betracht gezogen worden, im Falle der Abwinklung eines geraden Teils eines Trums des Förderbandes erschien aber das Betreiben von zwei Dornrädern gleichzeitig nicht ohne weiteres möglich. Gleichwohl kann dieser Vorteil auch mit der vorliegenden Erfindung und ihrer Lehre verbunden werden, wenn die beschriebenen Bedingungen eingehalten werden.

Hinsichtlich der Transportbehälter selbst hat es sich als besonders zweckmäßig herausgestellt, wenn jeder Transportbehälter in Gestalt eines länglichen, an beiden Enden offenen Tubus aus vier im wesentlichen ebenen Seitenwänden ausgebildet ist, welche an ihrem jeweils oberen Ende unter gemeinsamer Bildung eines Trichters unter einem Winkel nach außen abgebogen sind. Solche Transportbehälter sind robust, einfach herzustellen und im Betrieb sehr praktisch.

Für die Transportbehälter ist es ferner günstig, wenn ihre Seitenwände im Bereich ihres oberen Endes mit Ausnehmungen zur Wegnahme der Ecken versehen sind. Hierdurch wird die Herstellung begünstigt, weil das Abbiegen der Seitenwandränder bei entfernten Ecken besser vorgenommen werden kann, und dadurch ist die Trichterform einfacher herstellbar ist. Dadurch wiederum können die einzelnen Tuben im Verlaufe des Betriebes leichter in die Transportbehälter eingeführt werden.

Das Förderband gemäß der Erfindung läuft endlos um Antriebs- und Umlenkräder um, wobei vorzugsweise nur ein einziges Antriebsrad vorgesehen ist, welches Zähne für den Eingriff in die Zahnlücken des als Zahnriemen ausgestalteten Förderbandes aufweist; die anderen Umlenkräder des Förderbandes hingegen glatte Oberflächen haben.

Durch die Lehre der oben beschriebenen Erfindung wird nun das Förderband nicht mehr einfach in Doppel-U-Form geführt, sondern auch bei einem solchen endlos umlaufenden Förderband kann eine Krümmung in der beschriebenen Weise so erfolgen, daß ein gerades Teiltrum im richtigen Winkel unter die Kunststoffanspritzeinrichtung kommt, während gleichwohl in den Behandlungsstationen das Förderband die einzelnen Tuben in der richtigen Position bewegt. Dadurch kann man die Spritzbacken schnell öffnen und schließen und den Durchlauf der in Bearbeitung befindlichen Packungsteile schneller ausgestalten. Die richtige Anordnung des Packungstubus in der Anspritzeinrichtung über Eck, d.h. derart, daß eine Kante des Tubus in Laufrichtung vorn und diagonal gegenüberliegend die andere in Laufrichtung hinten liegt, hat zur Folge, daß schon beim ersten Öffnen der Außenformbacken das Getriebe den Innendorn zu bewegen beginnen kann. Schon nach dem ersten Öffnen der Außenformteile kann also gleichzeitig und zeitlich parallel die Bewegung des Innenformteils, d.h. des Dornes im Tubus begonnen werden.

Bevor man diese Lösung gemäß der Erfindung gefunden hatte, war auch an eine Schwenkung der Transportbehälter im Verlaufe ihrer Förderbewegung gedacht worden. Durch dieses Schwenken und Drehen entstanden aber nicht nur hohe Herstellungskosten, sondern der Versuchsaufbau hat sich auch als verschleißanfällig und unstabil erwiesen. Die neue Befestigung der Transportbehälter am Förderband und dessen Führung in Schienen bringt aber nicht nur den Vorteil, daß die zu bearbeitenden Tuben in jeder Station in der richtigen Position herangeführt und wegbewegt werden, sondern die Packungstuben sind auch stabil gehaltert, so daß jede Bearbeitungsrichtung in der richtigen Position angreifen kann.

Weitere Vorteile, vorteilhafte Merkmale und Anwendungsmöglichkeiten der vorliegenden Erfindung ergeben sich aus der folgenden Beschreibung bevorzugter Ausführungsbeispiele in Verbindung mit den Zeichnungen.

Es zeigen:
- Figur 1: die Draufsicht auf die Packungsherstellungsmaschine, bei welcher hauptsächlich das Förderband in Position zu zwei Dornrädern herausgestellt ist,
- Figur 2: eine Seitenansicht der Maschine der Figur 1, wenn man beispielsweise in Figur 1 von unten nach oben blickt,
- Figur 3: schematisiert das umgelegte Förderband mit den zwei Spritzstationen in Form von Innenformteil und zwei Außenformhälften,
- Figur 4: schematisch die herkömmliche Anordnung von Doppel-U-förmig geführten Förderbändern und Bewegung des Tubus mit parallel angeordneten Seitenwänden,
- Figur 5a: vergrößert schematisch die zur Laufrichtung parallel angeordneten Seitenwände des hier als parallel angeordnet bezeichneten Tubus,
- Figur 5b: die Anordnung des Tubus in den Anspritzeinrichtungen über Eck,
- Figur 6: eine seitliche und teilweise im Schnitt gezeigte Ansicht eines Ständers mit Führungsschienen und in diesen geführten Haltestücken mit angebrachtem Transportbehälter,
- Figur 7: die perspektivische Darstellung eines Klemmblockes,
- Figur 8: die Seitenansicht eines Haltestückes,
- Figur 9: die Draufsicht auf Figur 8,
- Figur 10: die Seitenansicht des Haltestückes, wenn man in Figur 8 von rechts nach links blickt,
- Figur 11: abgebrochen die Eingriffsposition eines Klemmblockes im zahnriemenförmigen Förderband,
- Figur 12: einen Aufnahmebehälter und
- Figur 13: die Ausgestaltung eines Gleitschuhes als alternative Ausführungsform zu den Rollen am unteren Ende des Haltestückes.

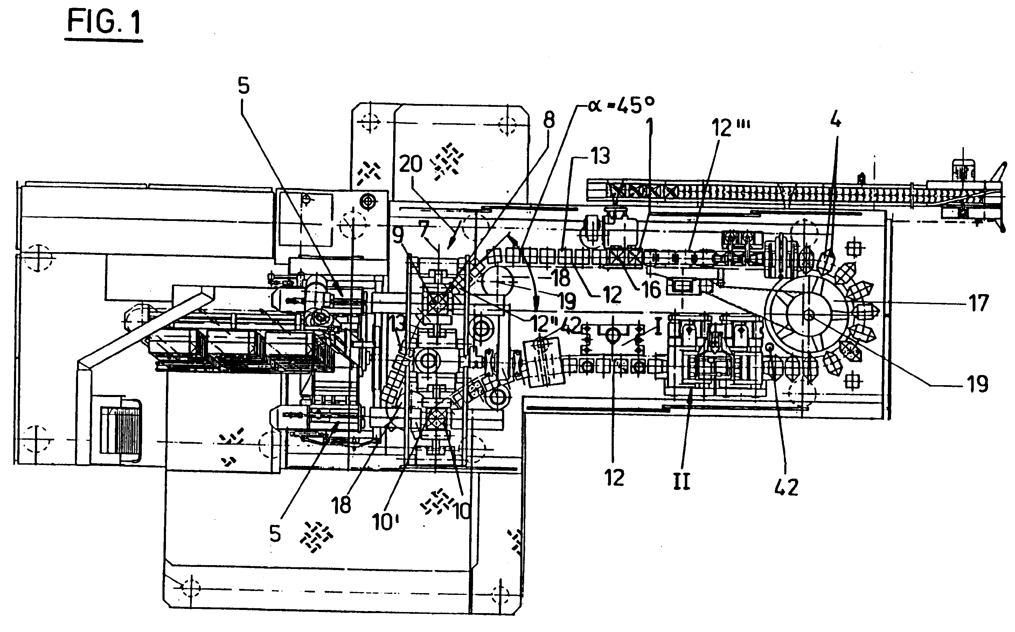

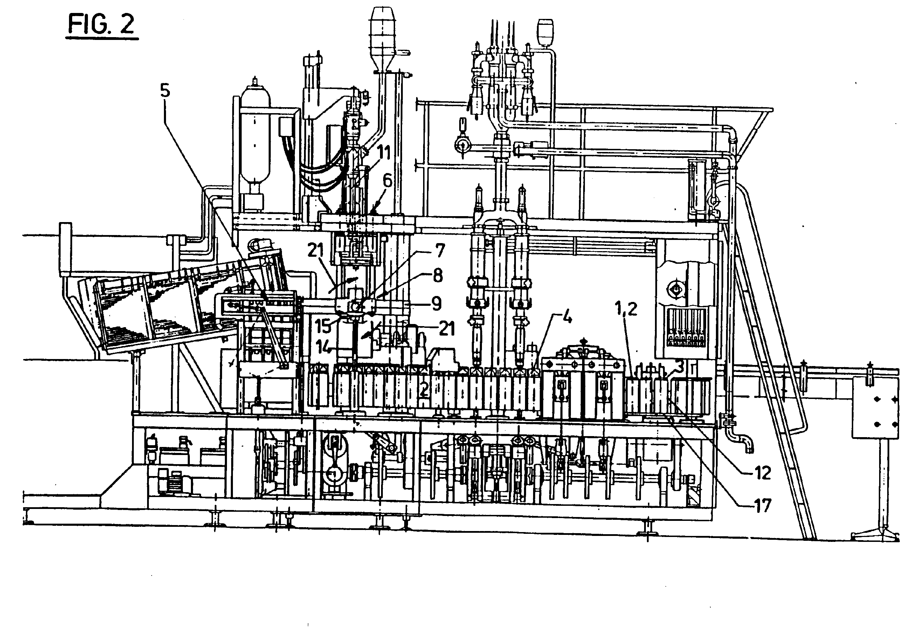

Die Gesamtansicht der Packungsherstellungsmaschine erkennt man am besten aus den Figuren 1 und 2, bei denen allerdings nur die für die Erfindung interessanten Teile deutlicher herausgestellt sind.

Es soll eine Packung 1 hergestellt werden, die einen Tubus 2 aus beschichtetem Papier, einen angespritzten Deckel 3 aus Kunststoff und einen Boden aus gefalteten Teilen 4 hat. Zur Herstellung einersolchen Packung sind allgemein mit 5 bezeichnete Einrichtungen zur Bildung des Tubus 2 gezeigt, während als Einrichtungen 6 zum Anspritzen von Kunststoff an den Tubus 2 in Figur 2 angedeutet sind. Dort gibt es zwei (siehe auch Figur 1; nur ein Dornrad wird beschrieben, weil beide Räder gleich sind) Dornräder 8 mit vier radial abstehenden, im Querschnitt quadratischen Dornen 9 als Innenform sowie mit zwei in Richtung der Dornradachse 7 bewegbaren Außenformhälften 10, 10' und eine Spritzeinheit 11. Dieses sind insgesamt betrachtet Kunststoffanspritzeinrichtungen.

Längs des gesamten Bearbeitungsweges verläuft ein Förderband 12 in Form eines Zahnriemens, der eine Reihe von hintereinander angeordnete , im Querschnitt viereckige Transportbehältern 13 haltert. Diese sind in Figur 1 oben links vor der ersten Krümmung leer, während sich im unteren, konkaven Bereich Tuben in den einzelnen Transportbehältern befinden. In Figur 2 ist eine Einrichtung zum Einführen des jeweiligen Tubus 2 in den Transportbehälter 13 in Form einer Führungsstange 14 mit Zugwinkel 15 dargestellt. Das Herausnehmen der fertig bearbeiteten Tuben 12 geschieht über die nicht näher bezeichneten Einrichtungen 16 in Figur 1 in der Mitte oben.

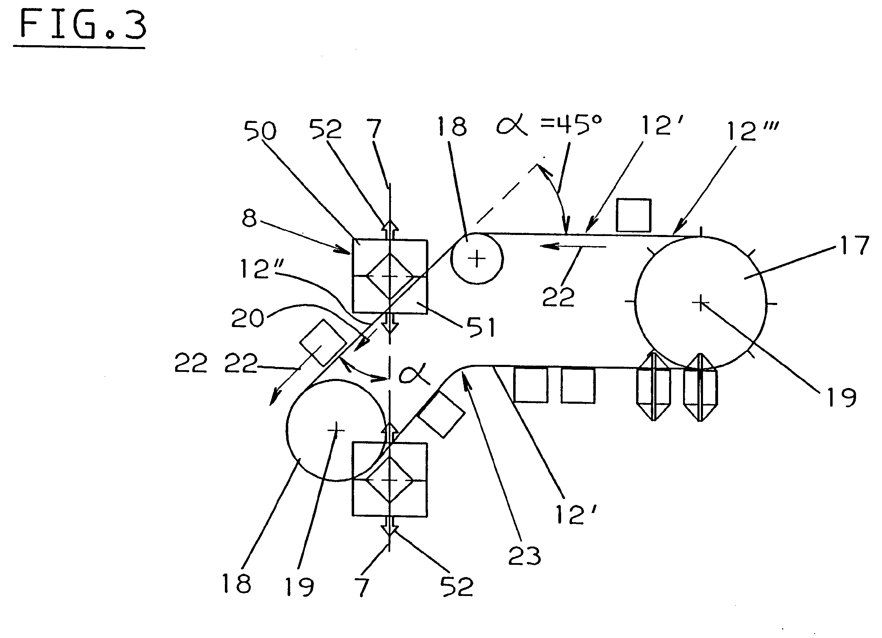

Wichtig für die Erfindung ist der Verlauf des Förderbandes 12, der aus den Figuren 1 und 3 besonders gut zu erkennen ist. Das in diesen Figuren jeweils oben gezeigte Dornrad 8 ist das hintere Dornrad, das unten gezeigte Dornrad wird hier das vordere genannt. In Figur 2 blickt man nämlich auf das vordere Dornrad 8.

Das Förderband 12 weist ein Antriebsrad 17 und mehrere Umlenkräder 18 auf, von denen nur zwei gezeigt sind mit jeweils vertikal stehenden Achsen 19. Das Förderband 12 hat ein oberes und entsprechend ein unteres Trum, die beide mit 12' bezeichnet sind und vom Antriebsrad 17 bis zum linken Umlenkrad 19 reichen. Das obere Trum 12' weist einen ersten Teil 12'' nach der konvexen Umlenkung um das obere Umlenkrad 18 auf. Dieser erste Teil 12'' des Trums 12' ist im Bereich des Dornrades 8 geradlinig, wie man sowohl aus Figur 1 als auch aus Figur 2 sieht. (Durch die Verdoppelung der Anlage mit den zwei Dornrädern 8 ergeben sich die gleichen Verhältnisse auch für das untere vordere Dornrad 8. Die Erläuterung genügt aber in Verbindung mit einem, hier z.B. dem oberen, hinteren Dornrad 8.) Dieser geradlinige erste Teil 12'' des Trums 12' ist unter einem Winkel α = 45° gegenüber dem zweiten Teil 12''' angeordnet, wobei dieser zweite Teil 12''' der Hauptteil des oberen Trums 12' ist und in den Figuren 1 und 3 oben rechts zwischen dem Antriebsrad 17 und dem ersten Umlenkrad 18 liegt. Der Winkel α = 45° kann auch dort festgestellt werden, wo die Achse 7 des Dornrades 8 mit der Laufrichtung 20 dieses geradlinigen Trums 12'' den Winkel α einschließt (Figur 3).

Zum allgemeinen Verständnis der Packungsherstellungsmaschine wird kurz erläutert, wo die einzelnen Bearbeitungsstationen liegen. Der Tubus aus beschichtetem Papier wird durch die Einrichtungen 5 erstellt und auf den Dorn 9 des Dornrades 8, welcher gerade horizontal nach links steht, aufgeschoben. Danach dreht sich das Dornrad 8 in Richtung des in Figur 2 gezeigten Pfeiles 21. In der Kunststoffanspritzeinrichtung 6 wird der Deckel angespritzt, wonach das Dornrad 8 sich weiter in Richtung des Pfeiles 21 nach rechts bewegt; und schließlich nach unten über den Transportbehälter 13, welcher leer in der Position unter dem jeweiligen Dornrad 8 steht. Bei der Verwendung von zwei Dornrädern 8 mit gemeinsamer Achse 7 erfolgt das Einschieben vom Dorn 9 des unteren Dornrades 8 jeweils in eine Lücke des Förderbandes zwischen zwei bereits mit Tuben 2 gefüllten Transportbehältern 13. Gemäß den Figuren 1 und 3 bewegt sichdas Transportband 12 im Gegenuhrzeigersinn in Richtung 22, welches die Laufrichtung 20 des geradlinigen Trums 12'' einschließt.

Nach Verlassen des vorderen unteren Dornrades 8 durchläuft der Tubus 2 mit angespritztem Deckel 3 nun den konkaven Teil 23 des unteren Trums 12' des Förderbandes 12, wobei in der Position I gefüllt, in der Station II der Boden verschlossen und in der Einrichtung 16 der bearbeitete Tubus vom Förderband 12 abgenommen und abgefördert wird.

Damit auch der konkave Teil 23 des Trums 12' des Förderbandes 12 genau der gewünschten Bahn folgt, ist das Förderband über Haltestücke 30 geführt, und entsprechend sind auch die Transportbehälter 13 geführt, wie nun beschrieben wird.

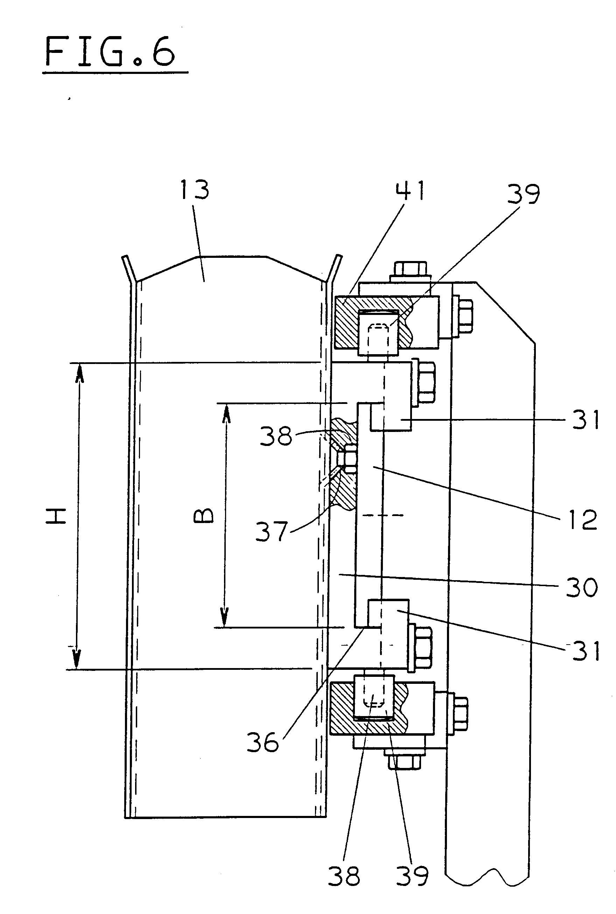

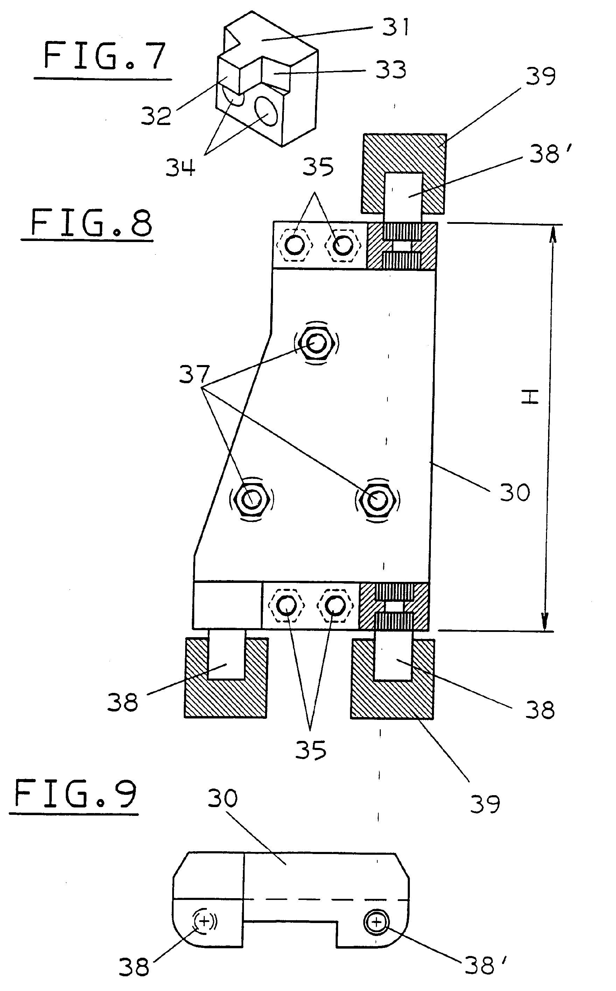

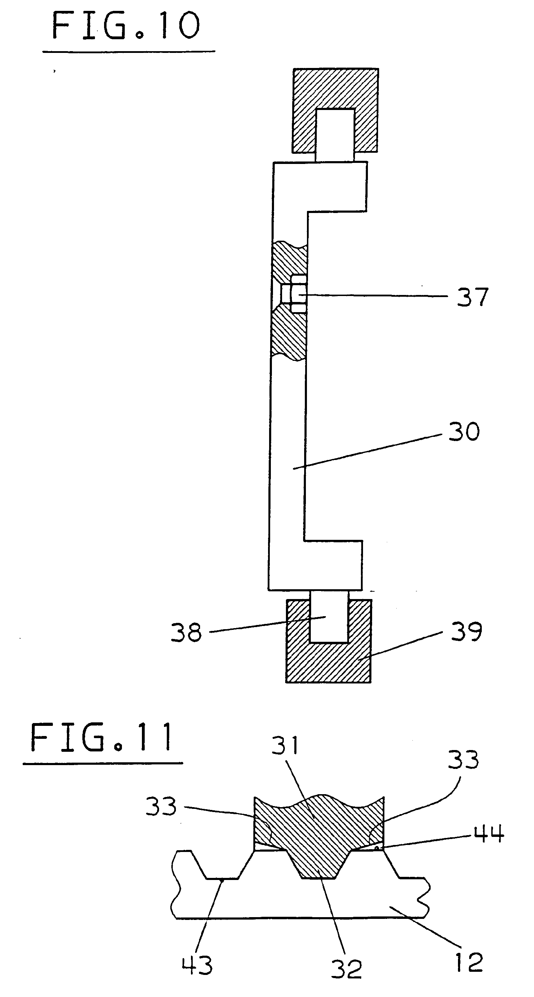

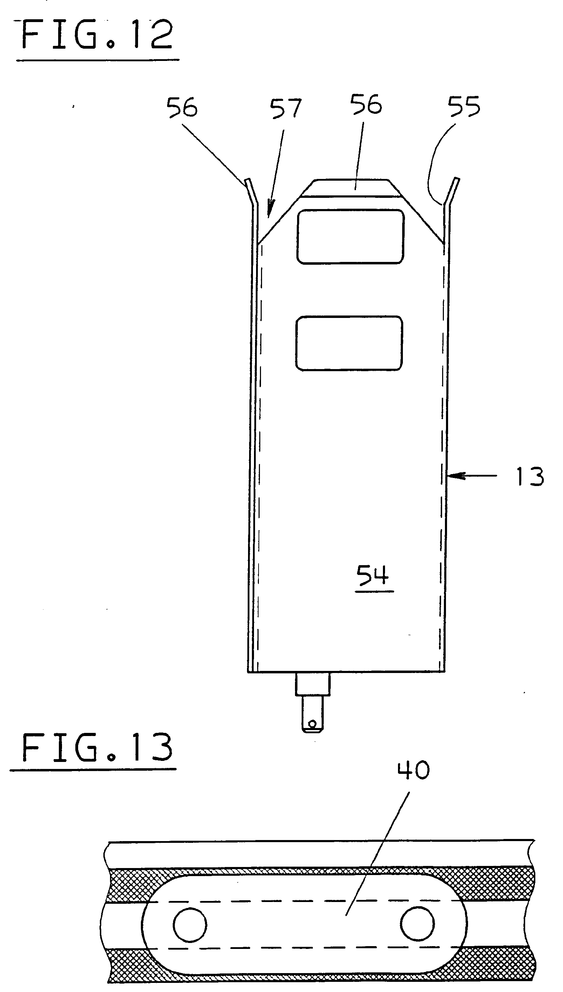

Das Förderband 12 ist ein Zahnriemen, wie Figur 11 zeigt. Ein Vertikalschnitt ist in Figur 6 dargestellt. Das Haltestück 30 erkennt man aus den Figuren 8 bis 10. Es hat die Form einer trapezförmigen Platte und besteht vorzugsweise aus Kunststoff, kann aber auch aus Aluminium bestehen. Die Höhe H des Haltestükkes 30 ist etwa gleich der Breite B des Förderbandes 12 bzw. ragt über dieses so hinaus, daß die obere und untere schmale Kante des Förderbandes 12 L-förmig von kurzen Schenkel des Haltestückes 30 umgriffen wird. Die eingentliche Befestigung erfolgt über Klemmblöcke 31, von denen einer in Figur 7 perspektivisch gezeigt ist. Er hat Quaderform und weist auf einer Seite im oberen Teil einen Zwischenzahn 32 auf, der von zwei abgeschrägten kleinen Flächen 33 flankiert wird, welche für die Krümmung des Zahnriemens bei festgeklemmtem Haltestück 30 sorgen. Im unteren Bereich weist der Klemmblock 31 zwei Befestigungslöcher 34 auf, mit denen er über Schrauben am Haltestück 30 befestigt werden kann, die durch zwei entsprechende Löcher 35 im Haltestück 30 (Figur 8) angeschraubt werden. Bei angeschraubtem Klemmblock 31 wird also die obere und auch die untere Längskante 36 des Förderbandes 12 U-förmig umgriffen, wie man gut aus Figur 6 erkennen kann. Durch Löcher 37 im Haltestück 30 können Schrauben 38 zum Transportbehälter 13 (Figuren 6 und 12) geführt werden, so daß der Transportbehälter 13 an drei Punkten mit dem Haltestück 30 befestigt ist. Der Klemmblock 31 (Figur 7) wird aber auch am oberen schmaleren Ende des trapezförmigen Haltestückes 30 über die dort ebenfalls gezeigten Löcher 35 verschraubt.

Aus dem oberen schmaleren Ende des Haltestückes 30 ragt ein Laufbolzen 38' und aus dem unteren breiten Ende des trapezförmigen Haltestückes 30 ragen zwei Laufbolzen 80 heraus, die bei der Darstellung der Figur 8 mit Rollen 39 versehen sind. Man kann beide Laufbolzen 38 unten aber auch mit einem Gleitschuh 40 versehen, wie in Figur 13 gezeigt ist, wodurch die gleiche Wirkung erzielt wird.

Die Rollen 39 bzw. Gleitschuhe 40 laufen nämlich in Führungsschienen 41 (Figur 6). Diese Schienen 41 sind an Ständern 42 ortsfest angebracht. In der Seitenansicht erkennt man den gesamten Ständer 42 in Figur 6, und in Figur 1 sind beispielsweise nur zwei Ständer 42 auf der Innenseite des unteren Trums 12' angedeutet. Es versteht sich aber, daß zur entsprechend stabilen Halterung der Führungsschienen 41 eine Vielzahl von derartigen Ständern 42 längs des Förderweges angebracht sind.

Figur 11 zeigt den Eingriff des Zwischenzahnes 32 des Klemmblokkes 31 in eine Zahnlücke 43 zwischen zwei Zähnen des zahnriemenförmig ausgestalteten Förderbandes 12. Zwischen den stirnseitig äußeren Flächen der Zähne des Förderbandes 12 einerseits und den schrägen Flanken 33 des Klemmblockes 31 andererseits ergeben sich bei geradlinig verlaufendem Förderband 12 gemäß Darstellung der Figur 11 Lufträume in Form eines Keiles 44, aus denen der Fachmann versteht, daß beim Krümmen des Förderbandes 12 zum Klemmstück 31 hin ausreichend Raum für die Bewegung des Zahnriemens gewährleistet ist.

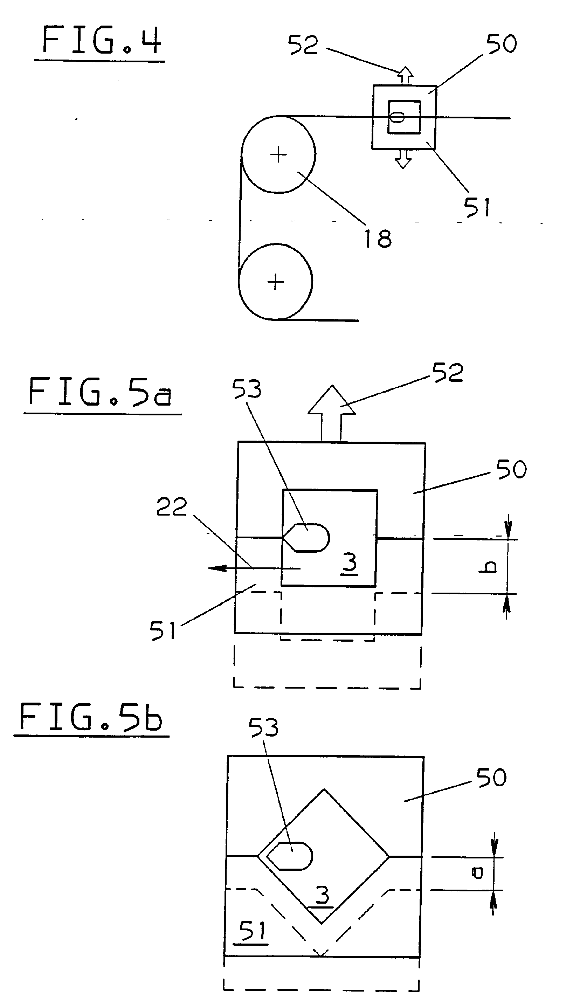

Würde man die Außenformhälften 50, 51 gemäß Figuren 4 und 5a in Richtung der Doppelpfeile 52 öffnen, dann könnte man den mit der Öffnungseinrichtung 53 und Deckel 3 versehenen Tubus erst dann in Richtung des Pfeiles 22 aus der Spritzform herausbewegen, wenn die jeweilige, und bei der hier angenommenen Betrachtung z.B. die untere Formhälfte 51 aus der mit ausgezogenen Linien gezeigten Position um die Strecke b in die mit gestrichelten Linien gezeigte Position nach unten wegbewegt ist, denn erst dann ist der Weg vollkommen frei.

Durch die oben beschriebene besondere Positionierung des Tubus 2 bzw. Transportbehälters 13 zum Dornrad 8, wie schematisch auch in Figur 3 gezeigt ist, kann die Übereck-Anordnung gemäß Figur 5b erreicht werden. Bewegt man jetzt die untere Außenformhälfte wiederum lediglich um einen wesentlich kleineren Betrag a aus der in Figur 5b mit ausgezogenen Linien gezeigten Position in die mit gestrichelten Linien gezeigte Position nach unten weg, dann kann (beide Außenformhälften bewegen sich gleichzeitig) kurz nach Beginn der Bewegung der Außenformhälften bereits auch die Bewegung des Tubus mit Deckel 3 begonnen werden. Hierbei ist die Bewegungsstrecke a wesentlich kleiner als die Bewegungsstrecke b.

Figur 12 zeigt schließlich den Transportbehälter 13 in Gestalt eines länglichen, an beiden Enden offenen Tubus. Er weist vier im wesentlichen ebene Seitenwände 54 auf, die an ihrem jeweils oberen Ende unter gemeinsamer Bildung eines Trichters unter einem Winkel nach außen (bei 55) abgebogen sind. Zwischen zwei abgebogenen Kanten 56 sind Ausnehmungen 57, durch welche Ecken weggenommen sind mit entsprechender Erleichterung der Herstellung.

## Patentansprüche

1. Maschine zur Herstellung von quaderförmigen Packungen, insbesondere für Milch, Saft oder dergleichen, die jeweils einen Tubus (2) aus mit Kunststoff beschichtetem Trägermaterial, wie z.B. Papier oder Pappe, aufweisen, mit Einrichtungen, (5) zur Bildung des Tubus (2) und Einrichtungen (6, 8, 11) mit Außenformbacken (51) zum Anspritzen von Kunststoff an den Tubus (2), mit einem längs des Bearbeitungsweges verlaufenden Förderband (12), welches eine Reihe von im Querschnitt viereckigen Transportbehältern (13) haltert, mit Einrichtungen (14, 15) zum Einführen des Tubus (2) in den jeweiligen Transportbehälter (13) und mit Einrichtungen (16) zum Herausnehmen und Abfördern des bearbeiteten Tubus (2), wobei eine Seitenwand (54) eines Transportbehälters (13) parallel zur Ebene des flachen Förderbandes (12) angeordnet ist, dadurch gekennzeichnet, daß wenigstens ein erster Teil (12'') mindestens eines Trums (12') des endlos umlaufenden Förderbandes (12) um einen festen Winkel (α) von etwa 45° gegenüber dem zweiten Teil (12''') dieses Trums (12') geneigt angeordnet verläuft, daß die Anspritzeinrichtung (6, 8, 11) im ersten geneigten Teil (12'') des Förderbandes (12) angeordnet ist, daß die Bewegungsrichtung (22) der Tuben (2) um etwa 45° zur Bewegungsrichtung (52) der Außenformbacken (51) geneigt ist und daß Schienen (41) zur Führung des Förderbandes (12) längs dessen Förderweges befestigt sind.

2. Maschine nach Anspruch 1, dadurch gekennzeichnet, daß die Einrichtung zum Anspritzen von Kunststoff an den Tubus (2) ein um eine Achse (7) intermittierend drehbar angetriebenes Dornrad (8) mit vier radial abstehenden, quaderförmigen Dornen (9) als Innenform sowie zwei in Richtung der Dornradachse (7) bewegbare Außenformhälften (10, 10') aufweist, daß der abgewinkelt angeordnete erste Teil (12'') des Trums (12') des mit Umlenkrädern (18) geführten Förderbandes (12) im Bereich des Dornrades (8) geradlinig ist, die Achsen (19) der Umlenkräder (18) neben dem Dornrad (8) etwa senkrecht zur Dornradachse (7) stehen und die Laufrichtung (20) dieses geradlinigen Trums (12'') unter etwa 45° zur Dornradachse (7) steht.

3. Maschine nach Anspruch 1 oder 2, dadurch gekennzeichnet, daß das Förderband (12) ein Zahnriemen ist, an dem die Transportbehälter (13) tragende Haltestücke (30) angebracht sind, deren Höhe (H) etwa gleich der Breite (B) des Förderbandes (12) ist, und daß die Haltestücke (30) mit Laufbolzen (38, 38') in den Führungsschienen (41) längs des Förderweges geführt sind.

4. Maschine nach Anspruch 3, dadurch gekennzeichnet, daß die Anbringung des plattenförmigen Haltestückes (30) am Förderband (12) mittels wenigstens eines Klemmblockes (31) erfolgt, der am Haltestück (30) so befestigt ist, daß das Förderband (12) U-förmig umgriffen wird, und daß auf der dem Haltestück (30) bezüglich Förderband (12) gegenüberliegenden Seite ein Zwischenzahn (32) aus dem Klemmblock (31) in eine Zahnlücke (43) des Förderbandes (12) eingreifend vorsteht.

5. Maschine nach einem der Ansprüche 1 bis 4, dadurch gekennzeichnet, daß sowohl längs der oberen als auch der unteren Längskante (36) des Förderbandes (12) jeweils eine Führungsschiene (41) ortsfest über Ständer (42) angebracht ist zur führenden Aufnahme von an den Haltestücken (30) angeordneten Rollen (39) und/oder Gleitschuhen (40).

6. Maschine nach einem der Ansprüche 3 bis 5, dadurch gekennzeichnet, daß die Ebene des plattenförmigen Haltestükkes (30) parallel zur Ebene des Förderbandes (12) liegt, das Haltestück (30) die Form einer im wesentlichen trapezförmigen Platte hat, und daß ein Laufbolzen (38') am oberen, schmaleren sowie zwei hintereinanderlaufende Laufbolzen (38) am unteren, breiteren Ende des trapezförmigen Haltestückes (30) angeordnet sind, wobei vorzugsweise an diesen beiden Enden des Haltestückes (30) jeweils ein Klemmblock (31) angeordnet ist.

7. Maschine nach einem der Ansprüche 2 bis 6, dadurch gekennzeichnet, daß zwei Trums (12') des Förderbandes (12) parallel zueinander und durch den Bereich zweier Dornräder (8) verlaufend abgewinkelt angeordnet sind und daß beide Dornräder (8) eine gemeinsame Drehachse (7) haben.

8. Maschine nach einem der Ansprüche 1 bis 7, dadurch gekennzeichnet, daß jeder Transportbehälter (13) in Gestalt eines länglichen, an beiden Enden offenen Tubus aus vier im wesentlichen ebenen Seitenwänden (54) ausgebildet ist, welche an ihrem jeweils oberen Ende unter gemeinsamer Bildung eines Trichters unter einem Winkel nach außen abgebogen sind.

9. Maschine nach Anspruch 8, dadurch gekennzeichnet, daß die Seitenwände (54) des Transportbehälters (13) im Bereich ihres oberen Endes mit Ausnehmungen (57) zur Wegnahme der Ecken versehen sind.

10. Maschine nach einem der Ansprüche 1 bis 9, dadurch gekennzeichnet, daß die nicht angetriebenen Umlenkräder (18) des Förderbandes (12) eine glatte Oberflächen haben.

## Claims

1. A machine for producing parallelepiped packages, particularly for milk, juice or the like, which each comprise a tube (2) of synthetic plastics coated carrier material such as, for example, paper or cardboard, with means (5) for forming the tube (2) and means (6, 8, 11) with outer mould halves (51) for injection moulding synthetic plastics material onto the tube (2) with, extending along the machining path, a conveyor belt (12) supporting a series of cross-sectionally rectangular transport containers (13), with means (14, 15) for introducing the tube (2) into the relevant transport container (13) and with means (16) for taking out and carrying away the machined tube (2), a side wall (54) of a transport container (13) being disposed parallel with the plane of the flat conveyor belt (12), characterised in that at least a first part (12'') of at least one strand (12') of the endlessly moving conveyor belt (12) extends at a fixed angle (α) of preferably about 45° to the second part (12''') of this strand (12') and in that a side wall (54) of a transport container (13) is disposed parallel with the main plane of the flat conveyor belt (12) and in that rails (41) are fixed to guide the conveyor belt (12) along its conveyance path.

2. A machine according to claim 1, characterised in that the means for moulding synthetic plastics material onto the tube (2) comprises a mandrel wheel (8) driven for intermittent rotation about an axis (7) and having four radially projecting parallelepiped-shaped mandrels (9) which serve as an inner mould and two outer mould halves (10, 10') adapted for movement in the direction of the mandrel wheel axis (7), and in that the angled-over first part (12'') of the strand (12') of the conveyor belt (12) which is guided by deflector wheels (18) is rectilinear in the region of the mandrel wheel (8), the spindles (19) of the deflector wheels (18) being disposed alongside the mandrel wheel (8) and substantially at right-angles to the mandrel wheel axis (7), the direction (20) of movement of this rectilinear strand (12'') being at about 45° to the mandrel wheel axis (7).

3. A machine according to claim 1 or 2, characterised in that the conveyor belt (12) is a toothed belt on which are fitted the retaining members (30) which support the transport containers (13) and the height (H) of which is substantially equal to the width (B) of the conveyor belt (12) and in that the retaining members (30) have runners (38, 38') by which they are guided in the guide rails (41) to move lengthwise of the conveyance path.

4. A machine according to claim 3, characterised in that fitting of the plate-like retaining member (30) on the conveyor belt (12) is achieved by means of at least one clamping block (31) which is so mounted on the retaining member (30) that engagement around the conveyor belt (12) is U-shaped and in that on the side opposite the conveyor belt (12), in respect of the retaining member (30), there is an intermediate tooth (32) which projects from the clamping block (31) to engage a gap (43) between the teeth of the conveyor belt (12).

5. A machine according to one of claims 1 to 4, characterised in that both along the upper and also along the lower longitudinal edge (36) of the conveyor belt (12), a respective guide rail (41) is rigidly mounted by means of stands (42) for the guiding supporting of rollers (39) and/or sliding blocks (40) which are disposed on the retaining members (30).

6. A machine according to one of claims 3 to 5, characterised in that the plane of the plate-like retaining member (30) is parallel with the plane of the conveyor belt (12), the retaining member (30) takes the form of a substantially trapezoidal plate and in that a runner (38') is disposed on the upper narrower end while two serially disposed runners (38) are disposed on the lower wider end of the trapezoidal retaining member (30), a clamping block (31) being preferably disposed at each of the two ends of the retaining member (30).

7. A machine according to one of claims 2 to 6, characterised in that two strands (12') of the conveyor belt (12) are disposed so that they angled-over in respect of each other and extend through the region of two mandrel wheels (8) and in that both these latter have a common axis (7) of rotation.

8. A machine according to one of claims 1 to 7, characterised in that each transport container (30) is constructed as an elongated tube which is open at both ends and which is constructed from four substantially flat side walls (54) which at their respective upper ends are bent over outwardly at an angle so that they jointly form a funnel.

9. A machine according to claim 8, characterised in that the side walls (54) of the transport container (13) are in the region of their top end provided with recesses (57) in order to take away the corners.

10. A machine according to one of claims 1 to 9, characterised in that the non-driven deflecting wheels (18) of the conveyor belt (12) have smooth surfaces.

## Revendications

1. Machine pour fabriquer des emballages parallélépipédiques, destinés notamment au lait, aux jus de fruits ou analogues, chaque emballage comportant un tube (2) en un matériau support enduit de plastique, par exemple en papier ou carton, comportant des dispositifs (5) destinés à former le tube (2) et des dispositifs (6, 8, 11), munis de mâchoires extérieures (51), destinés à rapporter par injection une matière plastique au tube (2) ; une bande transporteuse (12), courant le long du trajet de fabrication, bande qui soutient une série de récipients de transport (13), ayant en section transversale une forme rectangulaire ; des dispositifs (14, 15), destinés à insérer le tube (2) dans les récipients de transport (13) ; et des dispositifs (16) destinés à extraire et à éloigner le tube fabriqué (2), un panneau latéral (54) d'un récipient de transport (13) étant disposé parallèlement au plan de la bande transporteuse plate (12), caractérisée en ce qu'au moins une première partie (12'') d'au moins un brin (12') de la bande de transport sans fin (12) court en étant inclinée d'un angle fixe (α), d'environ 45°, par rapport à la deuxième partie (12"') de ce brin (12') ; que le dispositif d'injection (6, 8, 11) est disposé dans la première partie inclinée (12") de la bande transporteuse (12) que le sens de déplacement (22) des tubes (2) est incliné d'environ 45° par rapport au sens de déplacement (52) des mâchoires extérieures (51) ; et que des rails (41), destinés à guider la bande transporteuse (12), sont fixés le long de sa trajectoire.

2. Machine selon la revendication 1, caractérisée en ce que le dispositif destiné à rapporter par injection un plastique au tube (2) comporte une roue à mandrins (8), entraînée en rotation intermittente autour de l'axe (7), comportant quatre mandrins parallélépipédiques dépassant vers l'intérieur et servant de moule intérieur, ainsi que deux moitiés de moule extérieures (10, 10'), pouvant se déplacer dans la direction de l'axe (7) de la roue à mandrins ; que la première partie (12''), repliée, du brin (12') de la bande transporteuse (12) guidée à l'aide de galets de renvoi (18) dans la zone de la roue à mandrins (8) est rectiligne ; que les axes (19) des galets de renvoi (18) sont, à côté de la roue à mandrins (8), approximativement perpendiculaires à l'axe (7) de la roue a mandrins ; et que le sens de déplacement (20) de ce brin rectiligne (12") fait un angle d'environ 45° avec l'axe (7) de la roue à mandrins.

3. Machine selon la revendication 1 ou 2, caractérisée en ce que la bande transporteuse est une courroie dentée, à laquelle sont rapportés des supports (30) portant les récipients de transport (13) et dont la hauteur (H) est approximativement égale à la largeur (B) de la bande transporteuse (12) ; et que les supports (30) sont guidés par des boulons (38, 38') dans les rails de guidage (41) le long du trajet de transport.

4. Machine selon la revendication 3, caractérisée en ce que la fixation du support (30) en forme de plaque sur la bande transporteuse (12) s'effectue à l'aide d'au moins un bloc de serrage (31), qui est fixé au support (30) de façon que la bande transporteuse (12) soit enveloppée en U ; et que, sur le côté opposé au support (30) par rapport à la bande transporteuse (12), une dent intermédiaire (22) soit en saillie par rapport au bloc de serrage (31), pour se mettre en prise avec un entre-dent (43) de la bande transporteuse (12).

5. Machine selon l'une des revendications 1 à 4, caractérisée en ce que, tant le long de l'arête longitudinale supérieure que de l'arête longitudinale inférieure (36) de la bande transporteuse (12), un rail de guidage (41) est fixé à demeure à l'aide de montants (42), pour recevoir en guidage des galets (39) et/ou des sabots de glissement (40), disposés contre les supports (30).

6. Machine selon l'une des revendications 3 à 5, caractérisée en ce que le plan du support en forme de plaque (30) est parallèle au plan de la bande transporteuse (12) ; que le support (30) à la forme d'une plaque essentiellement trapézoïdale, et qu'un boulon (38') est disposé contre l'extrémité supérieure, étroite, du support trapézoïdal (30), avec deux boulons successifs (38) contre l'extrémité inférieure, large, de ce support trapézoïdal, un bloc de serrage (31) étant de préférence rapporté à chacune de ces deux extrémités du support (30).

7. Machine selon l'une des revendications 2 à 6, caractérisée en ce que deux brins (12') de la bande transporteuse (12) sont disposés parallèlement l'un à l'autre, en étant repliés quand ils traversent la zone des deux roues à mandrins (8), et que les deux roues à mandrins (8) ont un axe de rotation commun (7).

8. Machine selon l'une des revendications 1 à 7, caractérisée en ce que chaque récipient transporteur (13) a la forme d'un tube oblong, ouvert en ses deux extrémités, constitué de quatre panneaux latéraux essentiellement plans (54), et qui, en l'extrémité supérieure de chacun d'eux, est replié vers l'extérieur selon un certain angle, en formant tous ensemble un entonnoir.

9. Machine selon la revendication 8, caractérisée en ce que les panneaux latéraux (54) du récipient transporteur (13) sont, dans la zone de leur extrémité supérieure, pourvus d'évidements (57) destinés à l'enlèvement des coins.

10. Machine selon l'une des revendications 1 à 9, caractérisée en ce que les galets de renvoi (18) non menés de la bande transporteuse (12) ont une surface lisse.
